# EUROPEAN PATENT SPECIFICATION

(11) **EP 3 451 091 B1**
(45) Date of publication and mention of the grant of the patent: **14.02.2024**
(21) Application number: 18190461.6
(22) Date of filing: 23.08.2018
(51) Int. Cl.: G05B 19/4069

(54) **METHOD, APPARATUS, DEVICE AND SYSTEM FOR GENERATING OPERATION SIMULATION INFORMATION OF NUMERICAL CONTROL DEVICE**
VERFAHREN, VORRICHTUNG, VORRICHTUNG UND SYSTEM ZUR ERZEUGUNG VON BETRIEBSSIMULATIONSINFORMATIONEN EINER NUMERISCHEN STEUEREINRICHTUNG
PROCÉDÉ, APPAREIL, DISPOSITIF ET SYSTÈME DE GÉNÉRATION D'INFORMATIONS DE SIMULATION D'OPÉRATION DE DISPOSITIF DE COMMANDE NUMÉRIQUE

(30) Priority: 30.08.2017 CN 201710763759
(43) Date of publication of application: 06.03.2019
(73) Proprietor: Siemens Aktiengesellschaft, 80333 München (DE)
(72) Inventor: REN, Chao, Shanghai, 200237 (CN); SHE, Feng Ke, Beijing, 100085 (CN)
(74) Representative: Isarpatent

(56) References cited:
- EP-A1- 1 310 844
- CN-A- 107 037 782
- US-A1- 2009 299 509
- ANDERS JÖNSSON ET AL: "A virtual machine concept for real-time simulation of machine tool dynamics", INTERNATIONAL JOURNAL OF MACHINE TOOLS AND MANUFACTURE, vol. 45, no. 7-8, 1 June 2005 (2005-06-01) , pages 795-801, XP055535890, AMSTERDAM, NL ISSN: 0890-6955, DOI: 10.1016/j.ijmachtools.2004.11.012

## Description

### Technical field

The present disclosure relates to the field of digital factories, and the invention relates in particular to a method, a simulation apparatus, a computer device, a numerical control system, and a computer-readable medium for generating operation simulation information of a numerical control device being a cutting tool equipped with a cutter.

### Background art

To a person who is not present at a factory site, Computer Numerical Control (CNC) production processes are still not sufficiently transparent. In the prior art, field data must generally be acquired manually, or by online monitoring by sensors. However, in general, information acquired in such ways has a slow response, and explanations of the on-site conditions in the factory are few in number. The lack of real-time, precise field information will have a major impact on the efficiency and flexibility of product management.

US 2009/299509 A1 describes a method for simulating a controller and/ or a machine response of a machine tool.

ANDERS JÖNSSON ET AL: "A virtual machine concept for real-time simulation of machine tool dynamics" describes the structure and implementation of a concept for real-time simulation of machine tools using a water jet cutting machine as an application. The concept includes a real control system, simulation models of the dynamics of the machine and a virtual reality model for visualisation.

CN 107 037 782 A describes a method for monitoring a numerical control machine tool according to a simulation operation result of the numerical control machine tool.

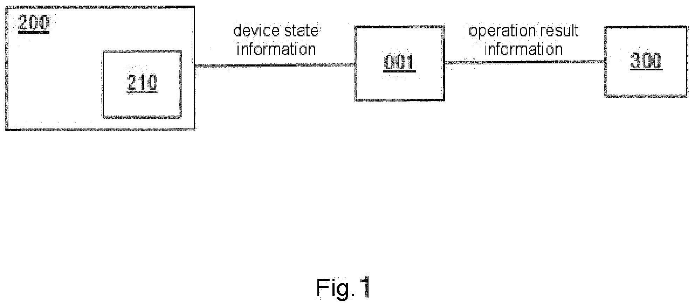

Referring to fig. 1, currently, a numerical control device 200 can communicate with an external device via a numerical control device controller 210. An existing online monitoring system mainly comprises two parts, namely: operation information collection and operation result visualization. For instance, the CNC controller 210 can send device state information of the numerical control device 200 corresponding thereto, such as a currently cutting state or an operation shutdown state, to a processing apparatus 001, and the processing apparatus 001 then converts the device state information to visual operation result information which is outputted to a client 300, e.g. a computer display screen. However, the visual result information referred to here is generally only value information of certain key indices, e.g. number of workpieces, machine utilization rate, machine historical states, etc. A user is unable to obtain more visually direct and detailed information, such as a processing process of a workpiece, which components of the numerical control device perform the processing thereof, etc.

### Content of the invention

In view of the above, the object of the present invention is to provide a method, a simulation apparatus, a computer device, a numerical control system, and a computer-readable medium for generating operation simulation information of a numerical control device being a cutting tool equipped with a cutter to provide real-time, precise physical operation information for a person who is not on-site. This object is solved by the attached independent claims and further advantageous embodiments and improvements of the present invention are listed in the dependent claims.

According to the present invention, a method for generating operation simulation information of a numerical control device 200 is provided, characterized in that the method comprises the following steps:
- acquiring physical operation information of the numerical control device 200; and
- acquiring model information corresponding to the numerical control device 200;
- generating operation simulation information of the numerical control device 200 on the basis of the physical operation information and the model information, and outputting the operation simulation information to a client 300.

Compared with the prior art, in the solution according to the invention, a remote user is enabled to see detailed information in a numerical control device operation process, such as a machining workpiece, a cutting tool and an operation procedure, in a visually direct way. This facilitates remote management of a factory by the user.

According to the present invention, the model information comprises computer model information of the numerical control device 200 and of an operation object thereof.

Since model information of the numerical control device 200 and of an operation object thereof is acquired, not only can simulation information of the numerical control device itself be generated, but overall operation simulation information can also be generated on the basis of an operation performed by the numerical control device 200 on an operation object such as a workpiece.

According to the present invention, the method further comprises the following step:
- acquiring time information corresponding to the physical operation information,
wherein the step of generating and outputting operation simulation information further comprises:
- receiving designated time information from the client 300;
- generating operation simulation information corresponding to the designated time information and outputting the operation simulation information to the client 300.

Hence, the invention not only enables real-time operation simulation information to be presented, but also enables a user to designate a time, so as to generate corresponding operation simulation information on the basis of historical data corresponding to the time designated by the user, thereby enabling the user to view operation simulation information within the designated time.

According to the present invention, the step of outputting to the client 300 further comprises the following step:
- outputting the operation simulation information in the form of virtual reality data to the client 300.

Hence, the invention provides a virtual reality experience for the user, so that the user has a more authentic experience of the operating scenario of the numerical control device, and the degree to which the operating scenario is restored to its original condition is increased.

According to a not claimed and not the invention belonging example, the physical operation information comprises at least either one of the following types of information:
- component basic information;
- component operation information.

According to the present invention, also a simulation apparatus 100 for generating operation simulation information of a numerical control device 200 in a numerical control system is provided, wherein the simulation apparatus 100 comprises:
a first acquisition unit 101, configured to acquire physical operation information of the numerical control device; and
a second acquisition unit 102, configured to acquire model information corresponding to the numerical control device;
an output unit 103, configured to generate operation simulation information of the numerical control device 200 on the basis of the physical operation information and the model information, and output the operation simulation information to a client 300.

Compared with the prior art, according to the invention, a remote user is enabled to see detailed information in an operation process of the numerical control device 200, such as a machining workpiece, a cutting tool and an operation procedure, in a visually direct way. This facilitates remote management of a factory by the user.

According to the simulation apparatus 100 of the present invention, the model information comprises computer model information of the numerical control device 200 and of an operation object thereof.

Since model information of the numerical control device and of an operation object thereof is acquired, not only can simulation information of the numerical control device itself be generated, but overall operation simulation information can also be generated on the basis of an operation performed by the numerical control device 200 on an operation object such as a workpiece.

According to the simulation apparatus 100 of the present invention, the simulation apparatus 100 further comprises:
a third acquisition unit, configured to acquire time information corresponding to the physical operation information,
wherein the output unit 103 further comprises:
   a receiving unit, configured to receive designated time information from the client 300;
   a sub-generating unit, configured to generate operation simulation information corresponding to the designated time information and output the operation simulation information to the client 300.

The solution according to the invention not only enables real-time operation simulation information to be presented, but also enables a user to designate a time, so as to generate corresponding operation simulation information on the basis of historical data corresponding to the time designated by the user, thereby enabling the user to view operation simulation information within the designated time.

According to the simulation apparatus 100 of the present invention, the output unit 103 is further configured to:
- output the operation simulation information in the form of virtual reality data to the client 300.

The invention can provide a virtual reality experience for the user, so that the user has a more authentic experience of the operating scenario of the numerical control device, and the degree to which the operating scenario is restored to its original condition is increased.

According to a not claimed and not to the invention belonging example of the simulation apparatus 100, the physical operation information comprises at least either one of the following types of information:
- physical component information;
- component operation information.

According to the present invention, a computer device for generating operation simulation information of a numerical control device is provided, wherein the computer device comprises the simulation apparatus 100.

According to the present invention, a numerical control system is provided, comprising a numerical control device 200, a simulation apparatus 100, a model provision apparatus 400 and at least one client 300, the numerical control device 200 comprising a controller 210, characterized in that:
the controller 210 of the numerical control device 200 acquires physical operation information of the numerical control device 200;
the controller 210 sends the physical operation information to the simulation apparatus 100;
the simulation apparatus 100 receives the physical operation information;
the simulation apparatus 100 acquires model information corresponding to the numerical control device 200;
the simulation apparatus 100 generates operation simulation information on the basis of the physical operation information and the model information and outputs the operation simulation information to the client 300;
the client 300 receives and presents the operation simulation information.

According to the invention, simulation information of an on-site operating scenario of a digital factory can be provided for a remote user, so as to provide a basis for the user to understand and manage the operation and operational details of a factory. Moreover, the solution can be applied in many scenarios. For example, it may be used for tracking machine faults, training operating personnel, monitoring the production of products, and for production planning and control optimization. Clearly, the solution based on this embodiment can provide convenience for many implementation scenarios.

According to the present invention, a computer-readable medium is provided, on which is stored an executable instruction, characterized in that the executable instruction, when executed, realizes the method described in a preceding embodiment.

### Description of the accompanying drawings

Other features, characteristics, advantages and benefits of the present invention will become more obvious through the following detailed description which makes reference to the accompanying drawings.
Fig. 1 is a schematic structural diagram of a system in the prior art for acquiring operation result information of a numerical control device 200.
Fig. 2 is a schematic structural diagram of a system for generating operation simulation information of a numerical control device 200 according to an embodiment of the present invention.
Fig. 3 shows schematically a schematic structural diagram of a simulation apparatus 100 according to an embodiment of the present invention.
Fig. 4 is a general structural block diagram of a simulation apparatus 100 realized by hardware according to an embodiment of the present invention.

List of labels used in the drawings:

| | | | |
|---|---|---|---|
| 001 | processing apparatus | 100 | simulation apparatus |
| 101 | first acquisition unit | 102 | second acquisition unit |
| 103 | output unit | 200 | numerical control device |
| 210 | Controller | 300 | client |
| 400 | model provision apparatus | 110 | memory |
| 120 | Processor | | |

### Particular embodiments

Preferred embodiments of the present disclosure are described in more detail below with reference to the accompanying drawings. Although the drawings illustrate preferred embodiments of the present disclosure, it should be understood that the present disclosure may be realized in various forms, and should not be restricted by the embodiments expounded here. On the contrary, these embodiments are provided in order to make the present disclosure more thorough and complete, and to completely convey the scope of the present disclosure to those skilled in the art.

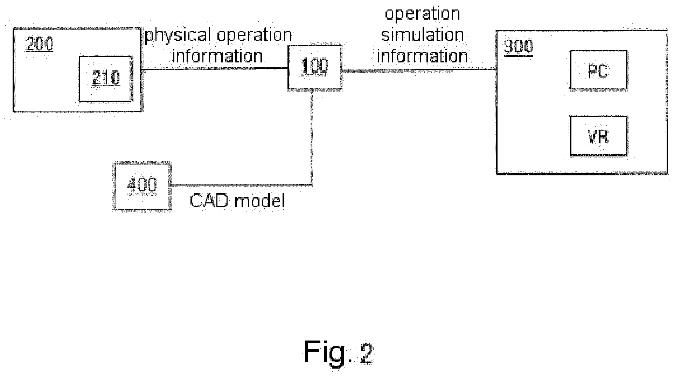

Reference is made to fig. 2, which is a schematic system structure diagram of a numerical control system for generating operation simulation information of a numerical control device according to an embodiment of the present invention.

The numerical control system according to this embodiment comprises a simulation apparatus 100, a numerical control device 200, a client 300 and a model provision apparatus 400, wherein the numerical control device further comprises a controller 210.

The simulation apparatus 100 is used for generating operation simulation information corresponding to physical operation information of the numerical control device 200. The operation simulation information may be digital simulation information (which may also be called a digital twin) corresponding to physical operation information of the numerical control device.

The controller 210 of the numerical control device 200 acquires physical operation information of the numerical control device 200; and sends the physical operation information of the numerical control device 200 to the simulation apparatus 100.

In the present invention, the physical operation information of the numerical control device 200 may be parameter information associated with structures and movements of various components involved when the numerical control device 200 is performing operations. Preferably, the physical operation information further comprises parameter information associated with a structure and movement of a component of an operation object of the numerical control device.

The component is a part of the numerical control device, and is formed of at least one element.

The physical operation information can comprise according to a not to the invention belonging example any one of the following types of information:
1) component basic information; e.g. component name, component model number, etc.
2) component operation information; e.g. component relative position information; component movement information, such as movement speed, rotation speed, etc.

For instance, in the case of a numerical control device used for a cutting operation, the component basic information thereof comprises cutter serial number information and cutter structure information; the component operation information thereof comprises information about axial position, spindle rotation speed, feeding speed and cutting torque, etc.

The simulation apparatus 100 acquires the physical operation information of the numerical control device CNC, and acquires model information corresponding to the numerical control device 200 from the model provision apparatus 400.

The model provision apparatus 400 is used for providing, to the simulation apparatus 100, model information of various components associated with operation of the numerical control device 200.

The model provision apparatus 400 according to the present invention may be located in a different device from the simulation apparatus 100, e.g. located in another server or personal computer which is different from the device to which the simulation apparatus 100 belongs, or may be located in the same device as the simulation apparatus 100, e.g. located on the same server.

The model information of the component comprises a model corresponding to each component in the numerical control device. According to the invention, the model information comprises a model of a key component in the numerical control device, that is spindle, linear axle, clamping, etc.

According to the invention, the model information comprises model information of the numerical control device 200 and an operation object thereof.

The model provided by the model provision apparatus 400 is a 3D model. According to the invention, the model provision apparatus 400 may provide a corresponding 3D model on the basis of selection information of a user for a 2D model or 3D model.

Next, the simulation apparatus 100 generates operation simulation information of the numerical control device on the basis of the physical operation information and the model information and outputs the operation simulation information to the client 300; the client 300 receives and presents the operation simulation information.

Specifically, the simulation apparatus 100 is adapted todrive, on the basis of the obtained physical operation information and model information, the model of the numerical control device 200 to execute an operation corresponding to the physical operation information, and generate operation simulation information, so as to realize visual simulation of operation of the numerical control device 200, and output the operation simulation information obtained by simulation to the client 300.

The operation simulation information is presented to the user in a visual form, such as an image or moving picture corresponding to the physical operation information of the numerical control device. In particular, the simulation apparatus 100 uses a data form based on virtual reality technology to output the operation simulation information, to enable the user to obtain the visual information by the method of virtual reality.

The client 300 may comprise a terminal device capable of presenting the operation simulation information to the user in a visual form. Examples are a personal computer, smart phone or virtual reality device, etc.

Preferably, the simulation apparatus 100 can output the operation simulation information to multiple clients 300 simultaneously. For example, referring to fig. 2, the simulation apparatus 100 may selectively output information to a personal computer (PC) and a mobile digital device, or to a virtual reality device (VR); or the simulation apparatus 100 may output to a PC and a VR simultaneously, for viewing by users of the two clients 300.

According to a preferred embodiment of the present invention, for example, a simulation apparatus 100 located on an independent server is connected to a numerical control device 200. In the invention, the numerical control device 200 is a cutting tool equipped with a cutter. The simulation apparatus 100 obtains physical operation information of the numerical control device 200, comprising: axial position of a machine tool spindle, spindle rotation speed, cutter serial number, feeding speed, cutting torque, etc. Next, the simulation apparatus 100 acquires, from a model provision apparatus 400 located at another communicable device, CAD 3D model information corresponding to the numerical control device 200, that is 3D models of components such as a spindle, linear axle, clamping, cutting tool, product being cut, etc. On the basis of the physical operation information obtained, the simulation apparatus 100 drives the cutting machine model information obtained to execute an operation corresponding to the real cutting machine, to obtain operation simulation information for the cutting machine, generates a VR (virtual reality) device-readable form therefrom, and outputs this to a VR device terminal 300, to enable a user to view, by means of VR spectacles, the operation simulation information simulating a cutting process of the numerical control device. Of course, when a client device 300 is a mobile device, such as a smart phone or a tablet, the simulation apparatus 100 could also output the operation simulation information to a mobile digital device in a visual format, for example by local area network, Ethernet or mobile communication network, etc.

Preferably, the simulation apparatus 100 may perform simulation and output on the basis of real-time data. According to the invention, the simulation apparatus receives designated time information from the client 300, and perform simulation and output on the basis of physical operation information corresponding to the designated time information and model information of a corresponding component.

The designated time information is a time inputted or selected by a user. It may be a point in time, or a period of time.

For example, the user may input a period of time: January 1, 2017, 10:00 - 11:00, to view operation simulation information of a numerical control device within this period of time.

Correspondingly, the simulation apparatus 100 at the same time acquires time information corresponding to the physical operation information, in order to generate, upon receipt of designated time information from the client 300, operation simulation information corresponding to the designated time information and output the operation simulation information to the client 300.

The time information is a time when the numerical control device 200 executes an operation corresponding to physical operation information. It may be a point in time, or a period of time.

For instance, a spindle of a numerical control machine tool maintains rotation at a first speed from 11:30 to 11:35, and rotates at a second speed from 11:36 to 11:45; supposing that all other parameters remain unchanged, in this case the physical operation information obtained by a controller of the numerical control machine tool comprises the first speed and time information "11:30-11:35" corresponding thereto, and the second speed and time information "11:36 to 11:45" corresponding thereto.

Specifically, the simulation apparatus 100 stores physical operation information and model information on the basis of corresponding time information, and upon obtaining designated time information, performs a query on the basis of the designated time information, so as to obtain physical operation information corresponding to the designated time information and model information corresponding thereto, and on this basis generates operation simulation information corresponding to the designated time information, and output the operation simulation information to the client 300; or the simulation apparatus 100 generates operation simulation information on the basis of physical operation information and model information obtained, then stores the operation simulation information on the basis of corresponding time information, and upon obtaining designated time information, performs a query on the basis of the designated time information in order to obtain corresponding operation simulation information, and outputs the operation simulation information to the client 300.

The numerical control device is used for cutting.

Preferably, the simulation apparatus 100 according to the present invention may be combined with an existing processing apparatus 001, to output operation result information and operation simulation information together to the client 300 after acquiring device state information and physical operation information.

According to the present invention, detailed information in a numerical control device operation process, such as a machining workpiece, a cutting tool and an operation procedure, can be seen in a visually direct way. Furthermore, the present invention not only enables real-time operation simulation information to be presented, but also enables a user to designate a time, so as to generate corresponding operation simulation information on the basis of historical data corresponding to designated time information of the user, thereby enabling the user to view operation simulation information corresponding to a point in time or period of time corresponding to the designated time information.

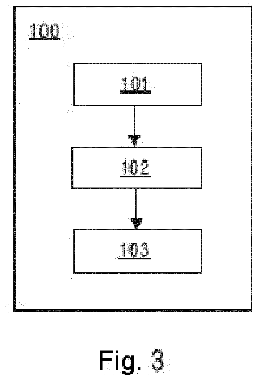

Fig. 3 shows schematically a schematic structural diagram of a simulation apparatus 100 according to an embodiment of the present invention.

The simulation apparatus 100 according to this embodiment comprises: a first acquisition unit 101, configured to acquire physical operation information of the numerical control device; a second acquisition unit 102, configured to acquire model information corresponding to the numerical control device; an output unit 103, for generating, on the basis of the physical operation information and the model information, operation simulation information of the numerical control device 200 and outputting the operation simulation information to a client 300.

The simulation apparatus 100 according to a preferred embodiment of the present invention further comprises: a third acquisition unit (not shown), configured to acquire time information corresponding to the physical operation information, wherein the output unit 103 further comprises: a receiving unit (not shown), configured to receive designated time information from the client 300; and a sub-generating unit (not shown), configured to generate operation simulation information corresponding to the designated time information and output the operation simulation information to the client 300.

The devices, apparatuses and units according to the present invention may be realized using software, hardware (e.g. integrated circuits, FPGA, etc) or a combination of software and hardware. In particular, the simulation apparatus 100 may be realized by means of hardware, such as an integrated circuit or a programmable gate array (FPGA), or realized by software configured in a computer device, etc.

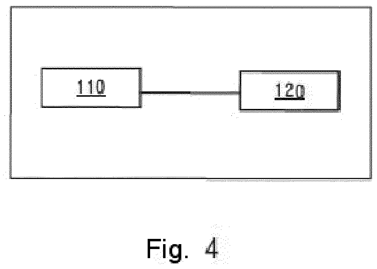

Reference is now made to fig. 4, which shows a general structural block diagram of a simulation apparatus 100 realized by hardware according to an embodiment of the present invention. The simulation apparatus 100 may comprise a memory 110 and a processor 120. An executable instruction may be stored in the memory 110. The processor 120 may realize an operation executed by each unit of the simulation apparatus 100, according to the executable instruction stored in the memory 110.

In addition, also provided according to the present invention is a machine-readable medium, on which is stored an executable instruction which, when executed, causes a machine to execute an operation realized by the simulation apparatus 100.

Those skilled in the art should understand that various changes in form and alterations may be made to the embodiments disclosed above without deviating from the attached claims.

## Claims

1. A method for generating operation simulation information of a numerical control device (200) being a cutting tool equipped with a cutter, the simulation information relating to an on-site operating scenario of a digital factory, wherein the method comprises the following steps:
a) acquiring (101) physical operation information of the numerical control device (200) comprising axial position of a machine tool spindle, spindle rotation speed, cutter serial number, feeding speed and cutting torque; and
b) acquiring (102) model information corresponding to the numerical control device (200) including acquiring, from a model provision apparatus (400), CAD 3D model information of a spindle, linear axle, clamping cutting tool, and product being cut;
c0) driving the cutting machine model of the numerical control device (200) to execute an operation, corresponding to the real cutting machine, according to the physical operation information;
c) generating (103) operation simulation information of the numerical control device (200) on the basis of the physical operation information and the model information, outputting the operation simulation information to a client (300), outputting the operation simulation information to a user in visual form of an image or moving picture, and generating a virtual reality, VR, device readable form therefrom;
d) wherein the model information comprises model information i) of various components associated with operation of the numerical control device (200), which comprises a model corresponding to each component in the numerical control device, and ii) an operation object thereof;
e) wherein the method further comprises the following step:
- acquiring time information corresponding to the physical operation information,
wherein the step of generating and outputting operation simulation information further comprises:
- receiving designated time information from the client (300);
- generating operation simulation information corresponding to the designated time information and outputting the operation simulation information to the client (300) .

2. The method as claimed in claim 1, **characterized in that** the step of outputting to the client (300) further comprises the following step:
- outputting the operation simulation information in the form of virtual reality data to the client (300).

3. A simulation apparatus (100) for generating operation simulation information of a numerical control device (200) being a cutting tool equipped with a cutter in a numerical control system, the simulation information relating to an on-site operating scenario of a digital factory, wherein the simulation apparatus (100) comprises:
a) a first acquisition unit (101), configured to acquire physical operation information of the numerical control device (200) comprising axial position of a machine tool spindle, spindle rotation speed, cutter serial number, feeding speed and cutting torque;
b) a second acquisition unit (102), configured to acquire model information corresponding to the numerical control device (200), wherein the model information comprises CAD 3D model information of a spindle, linear axle, clamping cutting tool, and product being cut, acquired from a model provision apparatus (400);
c0) the simulation apparatus (100) being adapted to drive the cutting machine model of the numerical control device (200) to execute an operation, corresponding to the real cutting machine, according to the physical operation information; and
c) an output unit (103), configured to generate operation simulation information of the numerical control device (200) on the basis of the physical operation information and the model information, output the operation simulation information to a client (300) to a user in visual form of an image or moving picture, and generate a virtual reality, VR, device readable form therefrom;
d) wherein the model information comprises model information i) of various components associated with operation of the numerical control device (200), which comprises a model corresponding to each component in the numerical control device, and ii) an operation object thereof;
e) wherein the simulation apparatus (100) further comprises:
a third acquisition unit, configured to acquire time information corresponding to the physical operation information,
wherein the output unit (103) further comprises:
a receiving unit, configured to receive designated time information from the client (300);
a sub-generating unit, configured to generate operation simulation information corresponding to the designated time information and output the operation simulation information to the client (300).

4. The simulation apparatus (100) as claimed in claim 3, **characterized in that** the output unit (103) is further configured to:
- output the operation simulation information in the form of virtual reality data to the client (300).

5. A computer device for generating operation simulation information of a numerical control device (200) being a cutting tool equipped with a cutter, wherein the computer device comprises the simulation apparatus (100) as claimed in claim 3.

6. A numerical control system, comprising a numerical control device (200) being a cutting tool equipped with a cutter, a simulation apparatus (100) according to claim 3, a model provision apparatus (400) and at least one client (300), the numerical control device (200) comprising a controller (210), wherein:
the controller (210) of the numerical control device (200) acquires physical operation information of the numerical control device (200);
the controller (210) sends the physical operation information to the simulation apparatus (100);
the simulation apparatus (100) receives the physical operation information;
the simulation apparatus (100) acquires the model information corresponding to the numerical control device (200);
the simulation apparatus (100) generates the operation simulation information on the basis of the physical operation information and the model information and outputs the operation simulation information to the client (300); and
the client (300) receives and presents the operation simulation information.

7. A computer-readable medium, on which is stored an executable instruction, **characterized in that** the executable instruction, when executed, realizes the method as claimed in any one of claims 1 to 2.

## Patentansprüche

1. Verfahren zum Erzeugen von Betriebssimulationsinformationen einer numerischen Steuervorrichtung (200), bei der es sich um ein Schneidwerkzeug handelt, das mit einem Schneider ausgerüstet ist, wobei die Simulationsinformationen ein örtliches Betriebsszenario einer digitalen Fabrik betreffen, wobei das Verfahren die folgenden Schritte umfasst:
a) Erfassen (101) von physischen Betriebsinformationen der numerischen Steuervorrichtung (200), die eine Axialposition einer Maschinenwerkzeugspindel, eine Spindeldrehgeschwindigkeit, eine serielle Schneidernummer, eine Zuführgeschwindigkeit und ein Schneiddrehmoment umfassen; und
b) Erfassen (102) von Modellinformationen, die der numerischen Steuervorrichtung (200) entsprechen, was das Erfassen von CAD-3D-Modellinformationen einer Spindel, einer Linearachse, eines Klemmschneidwerkzeugs und eines zu schneidenden Produkts von einer Modellbereitstellungseinrichtung (400) beinhaltet;
c0) Ansteuern des Schneidemaschinenmodells der numerischen Steuervorrichtung (200) zum Ausführen eines Betriebs, der der realen Schneidemaschine entspricht, gemäß den physischen Betriebsinformationen;
c) Erzeugen (103) von Betriebssimulationsinformationen der numerischen Steuervorrichtung (200) auf Basis der physischen Betriebsinformationen und der Modellinformationen, Ausgeben der Betriebssimulationsinformationen an einen Client (300), Ausgeben der Betriebssimulationsinformationen an einen Benutzer in visueller Form eines Bildes oder einer sich bewegenden Abbildung und Erzeugen einer Form davon, die von einer Vorrichtung der virtuellen Realität, VR, lesbar ist;
d) wobei die Modellinformationen Modellinformationen i) von verschiedenen Komponenten, die mit einem Betrieb der numerischen Steuervorrichtung (200) verknüpft sind, und die ein Modell umfassen, das jeder Komponente in der numerischen Steuervorrichtung entspricht, und ii) eines Betriebszwecks davon umfassen;
e) wobei das Verfahren ferner den folgenden Schritt umfasst:
- Erfassen von Zeitinformationen, die den physischen Betriebsinformationen entsprechen,
wobei der Schritt des Erzeugens und des Ausgebens von Betriebssimulationsinformationen ferner Folgendes umfasst:
- Empfangen von benannten Zeitinformationen vom Client (300);
- Erzeugen von Betriebssimulationsinformationen, die den benannten Zeitinformationen entsprechen, und Ausgeben der Betriebssimulationsinformationen an den Client (300).

2. Verfahren nach Anspruch 1, **dadurch gekennzeichnet, dass** der Schritt des Ausgebens an den Client (300) ferner den folgenden Schritt umfasst:
- Ausgeben der Betriebssimulationsinformationen in Form von Daten der virtuellen Realität an den Client (300).

3. Simulationseinrichtung (100) zum Erzeugen von Betriebssimulationsinformationen einer numerischen Steuervorrichtung (200), bei der es sich um ein Schneidwerkzeug handelt, das mit einem Schneider in einem numerischen Steuersystem ausgerüstet ist, wobei die Simulationsinformationen ein örtliches Betriebsszenario einer digitalen Fabrik betreffen, wobei die Simulationseinrichtung (100) Folgendes umfasst:
a) eine erste Erfassungseinheit (101), die dazu ausgelegt ist, physische Betriebsinformationen der numerischen Steuervorrichtung (200) zu erfassen, die eine Axialposition einer Maschinenwerkzeugspindel, eine Spindeldrehgeschwindigkeit, eine serielle Schneidernummer, eine Zuführgeschwindigkeit und ein Schneiddrehmoment umfassen;
b) eine zweite Erfassungseinheit (102), die dazu ausgelegt ist, Modellinformationen zu erfassen, die der numerischen Steuervorrichtung (200) entsprechen, wobei die Modellinformationen CAD-3D-Modellinformationen einer Spindel, einer Linearachse, eines Klemmschneidwerkzeugs und eines zu schneidenden Produkts umfassen, die von einer Modellbereitstellungseinrichtung (400) erfasst werden;
c0) wobei die Simulationseinrichtung (100) angepasst ist, das Schneidemaschinenmodell der numerischen Steuervorrichtung (200) zum Ausführen eines Betriebs, der der realen Schneidemaschine entspricht, gemäß den physischen Betriebsinformationen anzusteuern; und
c) eine Ausgabeeinheit (103), die dazu ausgelegt ist, Betriebssimulationsinformationen der numerischen Steuervorrichtung (200) auf Basis der physischen Betriebsinformationen und der Modellinformationen zu erzeugen, die Betriebssimulationsinformationen an einen Client (300) an einen Benutzer in visueller Form eines Bildes oder einer sich bewegenden Abbildung auszugeben und eine Form davon zu erzeugen, die von einer Vorrichtung der virtuellen Realität, VR, lesbar ist;
d) wobei die Modellinformationen Modellinformationen i) von verschiedenen Komponenten, die mit einem Betrieb der numerischen Steuervorrichtung (200) verknüpft sind, und die ein Modell umfassen, das jeder Komponente in der numerischen Steuervorrichtung entspricht, und ii) eines Betriebszwecks davon umfassen;
e) wobei die Simulationseinrichtung (100) ferner Folgendes umfasst:
eine dritte Erfassungseinheit, die dazu ausgelegt ist, Zeitinformationen zu erfassen, die den physischen Betriebsinformationen entsprechen,
wobei die Ausgabeeinheit (103) ferner Folgendes umfasst:
eine Empfangseinheit, die dazu ausgelegt ist, benannte Zeitinformationen vom Client (300) zu empfangen;
eine Erzeugungsuntereinheit, die dazu ausgelegt ist, Betriebssimulationsinformationen zu erzeugen, die den benannten Zeitinformationen entsprechen, und die Betriebssimulationsinformationen an den Client (300) auszugeben.

4. Simulationseinrichtung (100) nach Anspruch 3, **dadurch gekennzeichnet, dass** die Ausgabeeinheit (103) ferner zu Folgendem ausgelegt ist:
- Ausgeben der Betriebssimulationsinformationen in Form von Daten der virtuellen Realität an den Client (300).

5. Computervorrichtung zum Erzeugen von Betriebssimulationsinformationen einer numerischen Steuervorrichtung (200), bei der es sich um ein Schneidwerkzeug handelt, das mit einem Schneider ausgerüstet ist, wobei die Computervorrichtung die Simulationseinrichtung (100) nach Anspruch 3 umfasst.

6. Numerisches Steuersystem, das eine numerische Steuervorrichtung (200) umfasst, bei der es sich um ein Schneidwerkzeug handelt, das mit einem Schneider, einer Simulationseinrichtung (100) gemäß Anspruch 3, einer Modellbereitstellungseinrichtung (400) und mindestens einem Client (300) ausgerüstet ist, wobei die numerische Steuervorrichtung (200) eine Steuerung (210) umfasst, wobei:
die Steuerung (210) der numerischen Steuervorrichtung (200) physische Betriebsinformationen der numerischen Steuervorrichtung (200) erfasst;
die Steuerung (210) die physischen Betriebsinformationen an die Simulationseinrichtung (100) sendet;
die Simulationseinrichtung (100) die physischen Betriebsinformationen empfängt;
die Simulationseinrichtung (100) die Modellinformationen, die der numerischen Steuervorrichtung (200) entsprechen, erfasst;
die Simulationseinrichtung (100) die Betriebssimulationsinformationen auf Basis der physischen Betriebsinformationen und der Modellinformationen erzeugt und die Betriebssimulationsinformationen an den Client (300) ausgibt und
der Client (300) die Betriebssimulationsinformationen empfängt und präsentiert.

7. Computerlesbares Medium, auf dem eine ausführbare Anweisung gespeichert ist, **dadurch gekennzeichnet, dass** die ausführbare Anweisung, wenn sie ausgeführt wird, das Verfahren nach einem der Ansprüche 1 bis 2 realisiert.

## Revendications

1. Procédé de génération d'informations de simulation d'opération d'un dispositif de commande numérique (200) prenant la forme d'un outil de coupe équipé d'une fraise, les informations de simulation étant liées à un scénario d'exploitation sur site d'une usine numérique, le procédé comprenant les étapes suivantes :
a) l'acquisition (101) d'informations d'opération physique du dispositif de commande numérique (200) comprenant une position axiale d'une broche de machine-outil, une vitesse de rotation de broche, un numéro de série de fraise, une vitesse d'avance et un couple de coupe ; et
b) l'acquisition (102) d'informations de modèle correspondant au dispositif de commande numérique (200) comportant l'acquisition, auprès d'un appareil de fourniture de modèle (400), d'informations de modèle 3D de CAO relatives à une broche, un axe linéaire, un outil de coupe de serrage, et un produit qui est coupé ;
c0) le pilotage du modèle de machine de coupe du dispositif de commande numérique (200) pour exécuter une opération, correspondant à la machine de coupe réelle, selon les informations d'opération physique ;
c) la génération (103) d'informations de simulation d'opération du dispositif de commande numérique (200) sur la base des informations d'opération physique et des informations de modèle, la fourniture en sortie à destination d'un client (300) des informations de simulation d'opération, la fourniture en sortie à destination d'un utilisateur des informations de simulation d'opération sous la forme visuelle d'une image ou d'une animation, et la génération à partir de celle-ci d'une forme lisible par un dispositif de réalité virtuelle, notée VR;
d) les informations de modèle comprenant des informations de modèle relatives à i) divers composants associés au fonctionnement du dispositif de commande numérique (200), comprenant un modèle correspondant à chaque composant dans le dispositif de commande numérique, et ii) un objet d'opération de celui-ci ;
e) le procédé comprenant en outre l'étape suivante :
- l'acquisition d'informations temporelles correspondant aux informations d'opération physique,
l'étape de génération et de fourniture en sortie d'informations de simulation d'opération comprenant en outre :
- la réception d'informations temporelles désignées depuis le client (300) ;
- la génération d'informations de simulation d'opération correspondant aux informations temporelles désignées et la fourniture en sortie à destination du client (300) des informations de simulation d'opération.

2. Procédé selon la revendication 1, **caractérisé en ce que** l'étape de fourniture en sortie à destination du client (300) comprenant en outre l'étape suivante :
- la fourniture en sortie à destination du client (300) des informations de simulation d'opération sous la forme de données de réalité virtuelle.

3. Appareil de simulation (100) pour générer des informations de simulation d'opération d'un dispositif de commande numérique (200) prenant la forme d'un outil de coupe équipé d'une fraise dans un système de commande numérique, les informations de simulation étant liées à un scénario d'exploitation sur site d'une usine numérique, l'appareil de simulation (100) comprenant
a) une première unité d'acquisition (101), configurée pour acquérir des informations d'opération physique du dispositif de commande numérique (200) comprenant une position axiale d'une broche de machine-outil, une vitesse de rotation de broche, un numéro de série de fraise, une vitesse d'avance et un couple de coupe ;
b) une deuxième unité d'acquisition (102), configurée pour acquérir des informations de modèle correspondant au dispositif de commande numérique (200), les informations de modèle comprenant des informations de modèle 3D de CAO relatives à une broche, un axe linéaire, un outil de coupe de serrage, et un produit qui est coupé, acquises auprès d'un appareil de fourniture de modèle (400) ;
c0) l'appareil de simulation (100) étant adapté à piloter le modèle de machine de coupe du dispositif de commande numérique (200) pour exécuter une opération, correspondant à la machine de coupe réelle, selon les informations d'opération physique ; et
c) une unité de sortie (103), configurée pour générer des informations de simulation d'opération du dispositif de commande numérique (200) sur la base des informations d'opération physique et des informations de modèle, fournir en sortie à destination d'un client (300) à destination d'un utilisateur les informations de simulation d'opération sous la forme visuelle d'une image ou d'une animation, et générer à partir de celle-ci une forme lisible par un dispositif de réalité virtuelle, notée VR ;
d) les informations de modèle comprenant des informations de modèle relatives à i) divers composants associés au fonctionnement du dispositif de commande numérique (200), comprenant un modèle correspondant à chaque composant dans le dispositif de commande numérique, et ii) un objet d'opération de celui-ci ;
e) l'appareil de simulation (100) comprenant en outre :
une troisième unité d'acquisition, configurée pour acquérir des informations temporelles correspondant aux informations d'opération physique,
l'unité de sortie (103) comprenant en outre :
une unité de réception, configurée pour recevoir des informations temporelles désignées depuis le client (300) ;
une sous-unité de génération, configurée pour générer des informations de simulation d'opération correspondant aux informations temporelles désignées et fournir en sortie à destination du client (300) les informations de simulation d'opération.

4. Appareil de simulation (100) selon la revendication 3, **caractérisé en ce que** l'unité de sortie (103) est configurée en outre pour :
- fournir en sortie à destination du client (300) les informations de simulation d'opération sous la forme de données de réalité virtuelle.

5. Dispositif ordinateur pour générer des informations de simulation d'opération d'un dispositif de commande numérique (200) prenant la forme d'un outil de coupe équipé d'une fraise, le dispositif ordinateur comprenant l'appareil de simulation (100) selon la revendication 3.

6. Système de commande numérique, comprenant un dispositif de commande numérique (200) prenant la forme d'un outil de coupe équipé d'une fraise, un appareil de simulation (100) selon la revendication 3, un appareil de fourniture de modèle (400) et au moins un client (300), le dispositif de commande numérique (200) comprenant un contrôleur (210),
le contrôleur (210) du dispositif de commande numérique (200) acquérant des informations d'opération physique relatives au dispositif de commande numérique (200) ;
le contrôleur (210) envoyant les informations d'opération physique à l'appareil de simulation (100) ;
l'appareil de simulation (100) recevant les informations d'opération physique ;
l'appareil de simulation (100) acquérant les informations de modèle correspondant au dispositif de commande numérique (200);
l'appareil de simulation (100) générant les informations de simulation d'opération sur la base des informations d'opération physique et des informations de modèle et fournissant en sortie à destination du client (300) les informations de simulation d'opération ; et
le client (300) recevant et présentant les informations de simulation d'opération.

7. Support lisible par ordinateur, sur lequel est stockée une instruction exécutable, **caractérisé en ce que** l'instruction exécutable, lorsqu'elle est exécutée, réalise le procédé selon l'une quelconque des revendications 1 à 2.
